# EUROPEAN PATENT SPECIFICATION

(11) **EP 2 622 236 B1**
(45) Date of publication and mention of the grant of the patent: **05.06.2019**
(21) Application number: 11833069.5
(22) Date of filing: 28.09.2011
(51) Int. Cl.: F16C 32/06, F16C 27/06, F16C 23/00, F16C 17/10, F16C 17/08, F16C 17/04, F16C 17/24

(54) **COMPLIANT BEARING**
NACHGIEBIGES LAGER
PALIER FLEXIBLE

(30) Priority: 28.09.2010 US 387274 P
(43) Date of publication of application: 07.08.2013
(73) Proprietor: WAUKESHA BEARINGS CORPORATION, Pewaukee WI 53072 (US)
(72) Inventor: KIM, Jong, Soo, E. Greenwich RI 02818 (US)
(74) Representative: Stevenson-Hill, Jack Patrick
(86) International application number: PCT/US2011/053756
(87) International publication number: WO 2012/050917

(56) References cited:
- JP-A- 2009 257 445
- JP-A- 2009 257 445
- KR-A- 19980 040 214
- KR-A- 20030 016 246
- US-A- 1 349 157
- US-A- 5 054 938
- US-A- 5 531 522
- US-A- 5 743 654
- US-A- 5 743 654
- US-A- 5 938 344

## Description

### FIELD OF INVENTION

The present invention relates to compliant bearings.

### BACKGROUND OF THE INVENTION

Rotational bearings are very well known in the art to provide an interface between a rotating structure and a contact surface. It is common to employ some type of pad or pads at the interface to optimize the interconnection between the bearing and the rotating structure and to transmit axial and/or radial forces, which may be accomplished through providing compliance within the bearing in those respective directions.

Load capacity is highly dependent on the pad interface in a bearing. It has been found that the interface may be optimized for better transmission of axial thrust forces by tilting the pads of a bearing or otherwise providing a compliant contact to reduce the amount of friction. Such increasing load capacity by reduced friction may be achieved by controlled hydroplaning.

Typically, compliant arrangements include an array of fixed pads that are all tilted in a given rotational direction, such as a forward rotational direction. This is advantageous in that hydroplaning may be achieved.

In the prior art, it is well know that the very low viscosity of gas lubricant causes a gas thrust bearing to run at very thin film thickness to support thrust load generated in the rotating machines. However, a known drawback is that any misalignments or geometrical tolerances (such as warping) of rotating shaft collar and/or bearing surface negatively impacts the thrust load capability of the bearing. This runs counter to the continual desire to increase load capacity of the bearing. Further, any thermal distortion or deflection of the shaft collar and/or \bearing surface during operation is another factor that influences the thrust load capability of the bearing.

A spiral grooved thrust bearing typically has the best load capability among all hydrodynamic gas thrust bearings. However, the fact that negative damping may be generated at certain operating conditions (combination of speed and thrust load) is a major drawback of such spiral groove thrust bearings. This behavior of spiral grooved gas thrust bearings is another factor that undesirably limits load capacity of a bearing.

US5743654 relates to a hydrostatic and active control moveable pad bearing. According to the abstract of this document there is provided a one piece hydrodynamic bearing which can include hydrostatic support features. The pads are supported on a single thin web for pivoting on a support structure which can include one or more beam-like members. The bearings may have hydrostatic and active control attributes. The hydrostatic feed is provided through a post. A cavity provided under a pad support membrane can be used as an active control device. Preloading of the pad can be actively controlled. The pad has a limiting device to prevent a negative pre-load condition from occurring.

US5531522 relates to a fluid dampened support having variable stiffness and damping. According to the abstract of this document the fluid dampened support includes a network of closely spaced beams which act as structural springs which support the outer race of a roller bearing for movement in any direction. The spring rate or constant of the structural springs can be caused to change after a selected amount of deflection. The amount of deflection needed to cause the change in spring rate can be adjusted to suit the particular application. A liquid is provided in the spaces between the beams to dampen movement of the pads. The structure and space between the beams is designed so as to provide a variety of damping characteristics. In this way the bearings are able to limit or damp out the vibrations occurring when the supported member passes through natural frequencies before reaching operating speed.

US5938344 relates to a temperature compensating bearing. According to the abstract of this document the bearing includes bearing beams resiliently mounted to an outer shell to optimize load capacity for varying operating conditions. The bearing is made up of an outer shell, a plurality of circumferentially spaced arcuate beams each connected to the outer shell by two radially extending support members located at either end of the beams, and an plurality of lubricant channels. The centre of each beam is designed and configured to provide for an interference fit with the shaft, whilst the ends of each beam maintain a slight clearance with the shaft. As the outer shell contracts or expands due to temperature changes, the radial support members move towards or away from the shaft, respectively. The contraction or expansion due to changes in temperature will cause the beams to wrap or unwrap around the outer surface of the shaft, respectively. A plurality of lubricant channels are defined by the support members and the inner wall of the shell to supply lubricant, if needed, to any gaps between the shaft and the beams.

US5054938 relates to hydrodynamic bearings having beam mounted bearing pads. According to the abstract of this document the disclosure relates to a hydrodynamic thrust, journal or combined radial and thrust bearings. The bearing can be designed for mounting to either a shaft or a housing. If mounted for rotation with the shaft, the bearing pads move relative to a smooth support surface. The bearing includes a bearing pad structure that may change shape and move in any direction to optimise formation of a converging wedge for hydrodynamic operation, equalization of load on the bearing pads in thrust bearings and to adjust for any shaft misalignment. The bearing pad may be formed so as to contact the shaft in the installed state and deflect under film pressure. The pad is separated from the support member by a support structure which includes one or more beam-like members. The support structure preferably includes a primary support portion, a secondary support portion and a tertiary support portion. The beams allow deflection of the pad by either deflecting or twisting in a torsional mode. The bearing pad support structure may include portions which are fluid dampened. Alternatively, discrete pads may be mounted to the static housing portion.

US 1349157 relates to a thrust bearing. This document discloses a thrust bearing comprising relatively rotatable bearing members, one of which consists of a continuous flexible ring having an annular bearing surface, and means for supporting the ring to permit it to be flexed in response to the varying pressures due to the wedging action of the oil between the bearing surfaces when the said surfaces are in relative movement.

There is a need for a compliant bearing with increased load capacity.

There is a need for a thrust bearing with axial compliance.

There is a need for a compliant bearing with axial damping.

There is a need for a compliant bearing that is more stable than prior art compliant bearings.

There is a need for a thrust bearing with some type of axial compliance to help maintain a proper film thickness by allowing deformation and/or tilt of compliant bearing surface as need of rotating runner surface.

There is a need to provide axial compliance of a thrust bearing to increase the overall load capacity of the bearing.

There is a need to monitor the performance and/or operating conditions on any compliant bearing, radial, axial, or otherwise.

The invention provides a compliant bearing according to claim 1. The preamble of claim 1 is disclosed in US5743654.

### BRIEF DESCRIPTION OF THE DRAWINGS

In order that the advantages of the invention will be readily understood, a more particular description of the invention briefly described above will be rendered by reference to specific preferred embodiments illustrated in the appended drawings. Understanding that these drawings depict only typical embodiments of the compliant bearing of the invention and are not therefore to be considered limited of its scope, the invention will be described and explained with additional specificity and detail through the use of the accompanying drawings.
FIG. 1 provides an exploded perspective view of a first embodiment of a compliant bearing and a shaft and shaft collar, wherein the compliant bearing is configured as a groove thrust bearing.
FIG. 1A provides a side view of the embodiment of the compliant bearing shown in FIG. 1.
FIG. 1B provides a cross-sectional view of the embodiment of the compliant bearing shown in FIG. 1.
FIG. 1C provides a cross-sectional view of the embodiment of the compliant bearing shown in FIG. 1, wherein damping material has been added to the interstitial areas.
FIG. 2 provides a perspective view of a compliant bearing, wherein the compliant bearing is configured as a pad thrust bearing (not claimed).
FIG. 3 provides an axial view of the compliant bearing shown in FIG. 2.
FIG. 3A provides a side view of the compliant bearing shown in FIG. 2.
FIG. 3B provides a cross-sectional view of the compliant bearing shown in FIG. 2.
FIG. 4 provides a graph comparing the increased load capacity of the compliant bearing with that of prior art bearings.
FIG. 5 provides a perspective view of a compliant bearing with a sensor web configured for use therewith, wherein the compliant bearing is configured as a multi-compliant bearing (not claimed).
FIG. 5A provides a detailed perspective view of a bearing pad that may be used with the compliant bearing shown in FIG. 5.
FIG. 5B provides a cross-sectional view of a post that may be used with the bearing pad shown in FIG. 5A.
FIG. 6 provides a detailed view of a compliant bearing incorporating a sensor web (not claimed).

**DETAILED DESCRIPTION-LISTING OF ELEMENTS**

| ELEMENT DESCRIPTION | ELEMENT # |
|---|---|
| Shaft | 4 |
| Shaft collar | 6 |
| | |
| Groove thrust bearing | 10 |
| Pad thrust bearing | 12 |
| Main body | 14 |
| Multi-compliant bearing | 16 |
| | |
| Bearing surface | 20 |
| Groove pattern | 22 |
| First bearing surface spring | 24 |
| Second bearing surface spring | 26 |
| Interstitial area | 28 |
| Damping material | 29 |
| | |
| Bearing pad | 30 |
| Bearing pad interface | 32 |
| Pad radial spring | 34 |
| Pad axial spring | 36 |
| Interstitial area | 38 |
| Bearing pad | 30' |
| Bearing pad interface | 32' |
| Post | 34' |
| Post base | 34a' |
| | |
| Sensor web | 40 |
| First sensor | 42 |
| Second sensor | 42a |
| Third sensor | 42b |
| Fourth sensor | 42c |

### DETAILED DESCRIPTION

Before the various embodiments of the present invention are explained in detail, it is to be understood that the invention is not limited in its application to the details of construction and the arrangements of components set forth in the following description or illustrated in the drawings. The invention is capable of embodiments as defined within the scope of the appended claim. Also, it is to be understood that phraseology and terminology used herein with reference to device or element orientation (such as, for example, terms like "front", "back", "up", "down", "top", "bottom", and the like) are only used to simplify description of the present invention, and do not alone indicate or imply that the device or element referred to must have a particular orientation. In addition, terms such as "first", "second", and "third" are used herein and in the appended claim for purposes of description and are not intended to indicate or imply relative importance or significance.

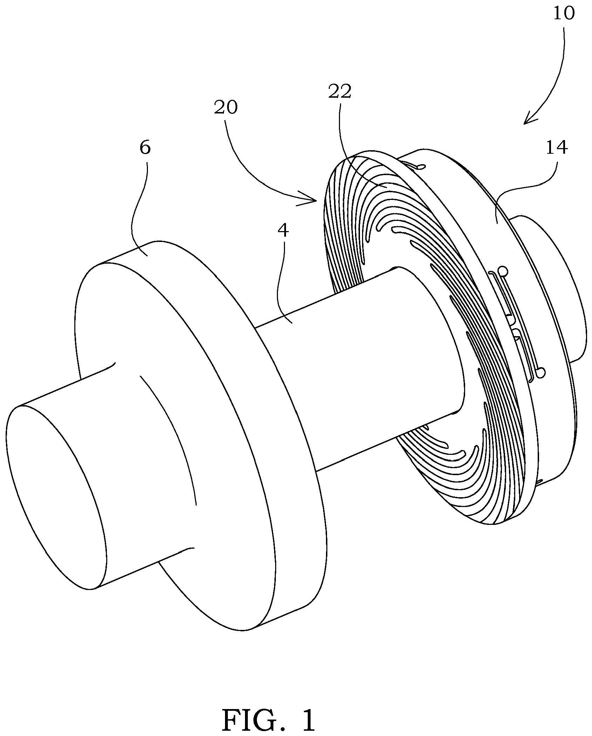

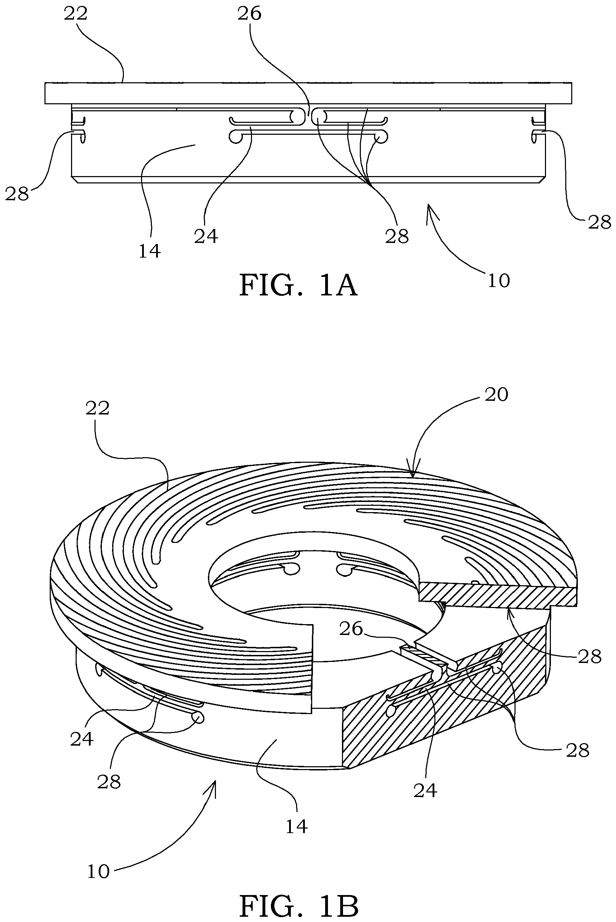

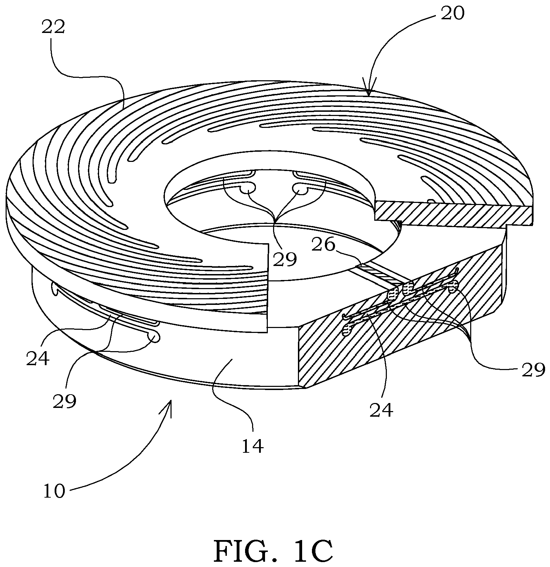

Referring now to the drawings, wherein like reference numerals designate identical or corresponding parts throughout the several views, FIG. 1 provides an exploded view of a first embodiment of a compliant bearing configured as a groove thrust bearing 10. The bearing surface 20 of the groove thrust bearing 10 is show separated from a shaft collar 6, which shaft collar 6 is typically affixed to a rotatable shaft 4 as shown in FIG. 1. In operation, the shaft collar 6 is typically located very close to the bearing surface 20, separated therefrom by only a thin layer of lubricant, which lubricant may be gas, fluid, or other suitable lubricant. The illustrative embodiment of the groove thrust bearing 10 includes a main body 14, which is typically fixedly mounted to a support (not shown) during operation.

The embodiment of the groove thrust bearing 10 shown in FIGS. 1-1B includes a groove pattern 22 formed in the bearing surface 20. The pictured embodiment shows a groove pattern 22 configured as a spiral groove pattern 22. Other embodiments of the groove thrust bearing may have other groove patterns 22.

The illustrative embodiment of a groove thrust bearing 10 is shown from a side vantage in FIG. 1A, and FIG. 1B provides a cross-sectional view thereof. The groove thrust bearing 10 may be formed with at least one bearing surface spring 24, 26 cooperatively engaging the main body 14 with the bearing surface 20. The illustrative embodiment includes a first bearing surface spring 24 oriented perpendicular to the rotational axis of the shaft 4 and a second bearing surface spring 26 oriented parallel to the rotational axis of the shaft 4. The first and second bearing surface springs 24, 26 may be integrally formed with one another, and/or integrally formed with the main body 14 and/or bearing surface.

Generally, the groove thrust bearing 10 disclosed herein provides axial compliant via the bearing surface springs 24, 26. This compliancy of the bearing surface allows the groove thrust bearing 10 to maintain a proper film thickness under a variety of conditions under which prior art bearings would fail. The groove thrust bearing 10 accomplishes this by allowing deformation and/or tilt of bearing surface 20 as needed based on perturbations from the shaft collar 6, groove thrust bearing 10, and/or lubricant.

The illustrative embodiment of a groove thrust bearing 10 shown herein utilizes four first bearing surface springs 24 and four second bearing surface springs 26, wherein each first bearing surface spring 24 is generally perpendicular with respect to each second bearing surface spring 26. However, other embodiments of the compliant bearing may use other numbers of first and second bearing surface springs 24, 26 (and associated elements) in different configurations and/or orientations without limitation.

As best shown in FIGS. 1A & 1B, the illustrative embodiment of a groove thrust bearing 10 includes a plurality of interstitial areas 28 to allow for a predetermined amount of motion of the bearing surface 20 and first and second bearing surface springs 24, 26 with respect to the main body 14. The illustrative embodiment includes a first interstitial area 28 between the bottom surface of the first bearing surface spring 24 and the main body 14, wherein either end of the first interstitial area 28 is formed with a generally circular cross-sectional shape. A second interstitial area 28 may be formed between the top surface of the first bearing surface spring 24 and the main body 14. The second interstitial area 28 may be interconnected with a third interstitial area 28 between the second bearing surface spring 26 and the main body 14, such that a portion of the main body 14 is cantilevered over a portion of the first bearing surface spring 24. Finally, a fourth interstitial area 28 may be formed between the bearing surface 20 and main body 14 opposite the groove pattern 22, as best shown in FIG. 1A.

The illustrative embodiment of the groove thrust bearing 10 having a spiral groove pattern 22 is known to have the best load capability among all hydrodynamic gas compliant bearings.

However, a drawback of such compliant bearings is the potential to generate a negative damping at certain operating conditions (combination of speed and compliant load). The axial compliancy from the first and second bearing surface springs 24, 26 in cooperation with damping material 29 in certain interstitial areas 28 mitigates and in some cases eliminates any instability from negative damping by creating a positive resultant damping. This leads to increased load capacity compared to spiral groove bearings of the prior art.

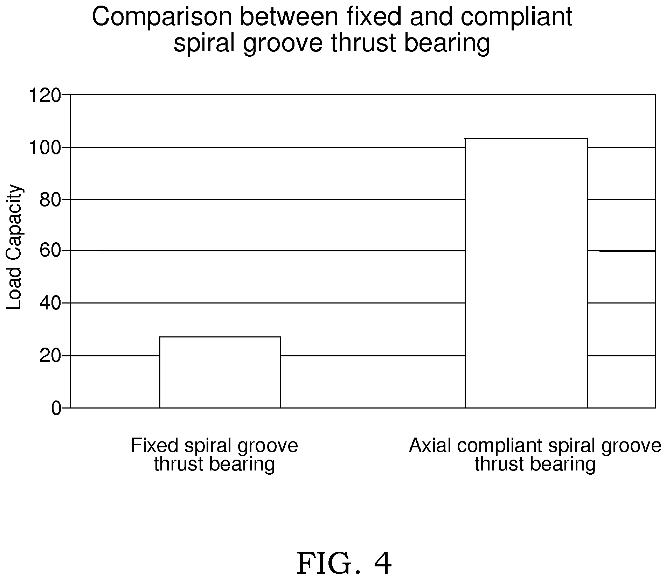

A chart comparing the load capacity (in pounds) between prior art non-compliant spiral groove bearings and the illustrative embodiment of the groove thrust bearing 10 disclosed herein is shown in FIG. 4. As is readily apparent from FIG. 4, a prior art bearing may have a load capacity of less than 30 (thirty) pounds, while a comparable compliant bearing with integrated damping capability may achieve axial thrust loads in excess of 100 (one hundred) pounds. Additionally, through testing it has been determined that lower compliant capacity may result from misalignment of the shaft collar 6 and bearing surface 20 (or bearing pad interface 32), or if the shaft collar 6 operates at the threshold film thickness of negative damping. The compliant bearing as disclosed herein addresses such problems regarding static and/or dynamic misalignment/perturbation/distortion.

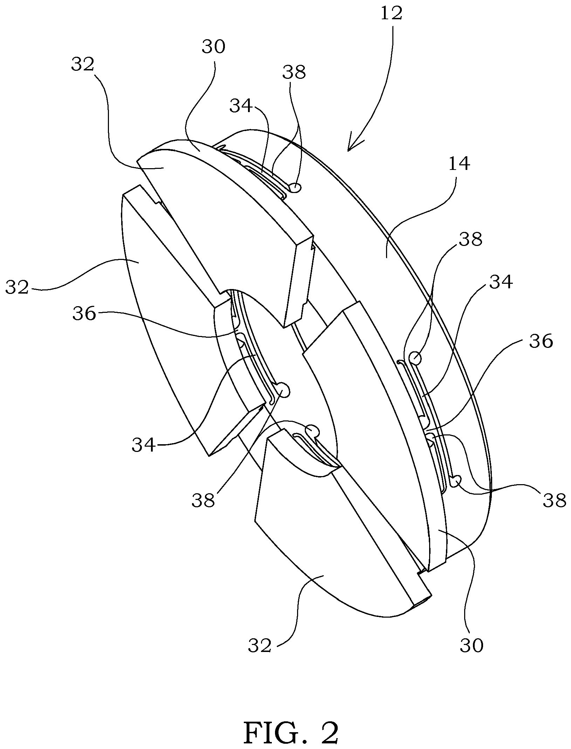

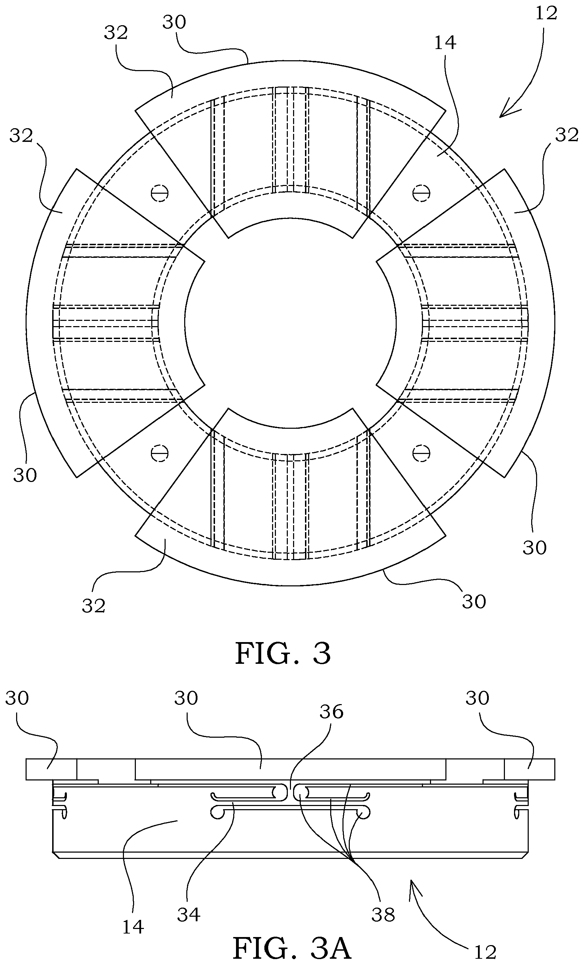

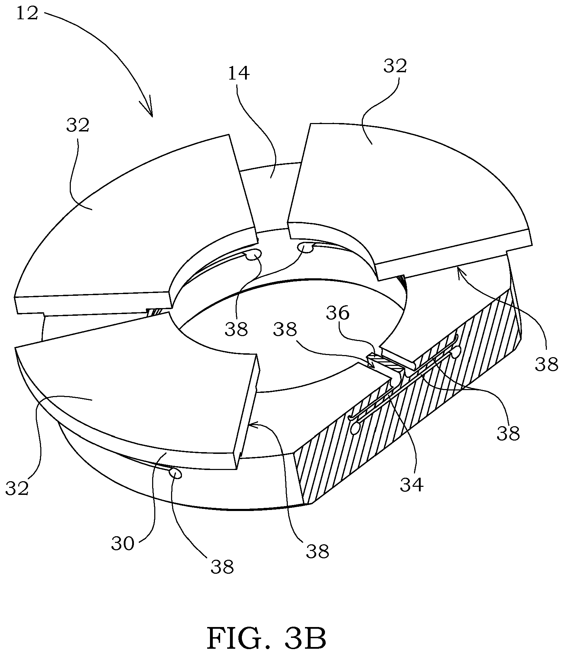

A second compliant bearing configured as a pad thrust bearing 12 is shown in FIGS. 2-3B. The compliant bearing includes four bearing pads 30 equally spaced about the main body 14 of the pad thrust bearing 12, as best shown in FIG. 3, which provides an axial view of the bearing pad interface 32 of each bearing pad 30 for the second compliant bearing.

The bearing pads 30 in the second compliant bearing are generally trapezoidal in shape, with the base and top edges being arcuate rather than linear. However, the bearing pads 30 may have any shape and/or configuration, and the scope of the compliant bearing as disclosed herein is in no way limited thereby. Additionally, the second compliant bearing utilizes four bearing pads 30, and consequently, four pad radial springs 34 and four pad axial springs 36 are used. However, other compliant bearings may use other numbers of bearing pads 30 (and associated elements) without limitation.

As best shown in FIGS. 3A & 3B, as a corollary to the groove thrust bearing 10, the pad thrust bearing 12 includes a plurality of interstitial areas 38 to allow for a predetermined amount of motion of the bearing pads 30 and pad radial and axial springs 34, 36 with respect to the main body 14. The pad thrust bearing 12 includes a first interstitial area 38 between the bottom surface of the pad radial spring 34 and the main body 14, wherein either end of the first interstitial area 38 is formed with a generally circular cross-sectional shape. A second interstitial area 38 may be formed between the top surface of the pad radial spring 34 and the main body 14. The second interstitial area 38 may be interconnected with a third interstitial area 38 between the pad axial spring 36 and the main body 14, such that a portion of the main body 14 is cantilevered over a portion of the pad radial spring 34. Finally, a fourth interstitial area 28 may be formed between the bearing pad 30 and main body 14 opposite the bearing pad interface, as best shown in FIG. 3A.

The optimal amount of compliancy will vary from one application to the next, and is therefore in no way limiting to the scope of any compliant bearing disclosed herein. Additionally, the configuration of the bearing surface springs 24, 26, pad radial spring 34, pad axial spring, interstitial areas 28, 38, and/or any damping material 29, 39 may be configured and/or oriented differently than as shown without departing from the scope of the compliant bearing as disclosed herein. Such alternative configurations and/or orientations may be required to achieve the optimal amount of compliancy for a given application.

The desired features for a specific compliant bearing may be achieved within a very short axial length by utilizing an EDM (Electrical Discharge Machine) technique. It is contemplated that the springs 24, 26, 34, 36 will typically be configured in pairs, which configuration is most compatible with the wire EDM cutting process through the main body 14 of the compliant bearing. In such a cutting process, two springs 24, 26, 34, 36 may be cut simultaneously due to the symmetry of the compliant bearing about it axial face. For example, as seen in FIG. 2, a total of four pairs of springs 34, 36 may be formed via two wire EDM cutting operations. It is also contemplated that the compliant bearings disclosed herein may be manufactured using alternative materials, such as polymers, plastics, other synthetic materials, and/or combinations thereof, certain of which may use injection molding or thermoforming.

The compliance feature of the groove thrust bearing 10 and pad thrust bearing 12 as disclosed herein as illustrative embodiments of a compliant bearing (which compliancy is provided by the first and second bearing surface springs 24, 26 and pad radial and axial springs 34, 36, respectively) may be implemented on any compliant bearings (e.g., spiral groove thrust bearing, conventional or flexure pivot tilt pad bearing, radially compliant bearing, etc.). Also, other types of springs 24, 26, 34, 36 other than leaf springs (such as those shown in the embodiments pictured herein) may be used with the compliant bearings disclosed herein to achieve the desired level of axial and/or radial compliancy.

In any embodiment of a compliant bearing, including but not limited to the groove thrust bearing 10 and pad thrust bearing 12 as disclosed herein, the compliant bearing may be configured with integrated damping capabilities. For example, as seen in FIG. 1C, a damping material 29 (e.g., a rubber, silicone, polymer material, etc.) may be positioned into various interstitial areas 28. Additionally, although not shown, radial compliant bearings and/or other axially compliant bearings (such as a pad thrust bearing 12) may be configured with integrated damping capabilities.

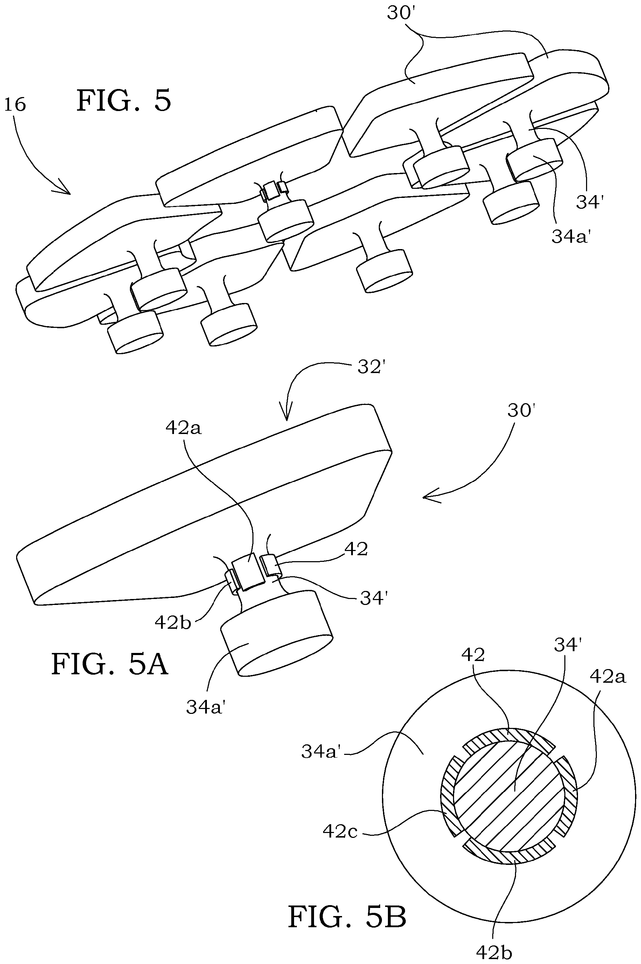

Any embodiment of a compliant bearing (including but not limited to a radially compliant bearing and the groove and pad thrust bearings 10, 12 shown herein), a sensor web 40 may be engaged with the compliancy members. Although the compliancy members for the groove thrust bearing 10 and pad thrust bearing 12 are shown herein as various springs 24, 26, 34, 36, FIGS. 5-5B show another compliant bearing configured as a multi-compliant bearing 16 wherein the compliancy members are configured as posts 34'.

FIG. 5 provides a perspective view of a plurality of bearing pads 30' that may be used with the third compliant bearing. The bearing pads 30' may include a post 34' opposite the bearing pad interface 32', which post 34' may be integrally formed with the bearing pad 32'. The posts 34' may terminate at a post base 34a' opposite the bearing pad interface 32'. The post base 34a' may cooperate with a main body to secure the bearing pads 30' in relative special relation to one another within a predetermined amount of allowed movement.

As shown in detail in FIGS. 5A & 5B, sensors 42, 42a, 42b, 42c may be secured to the post 34' such that various forces experiences by the post 34' (and consequently, various forces experiences by the bearing pad 30') may be detected, and subsequently monitored and/or recorded. It is contemplated that the sensors 42, 42a, 42b, 42c may be configured as strain gauges, and more specifically, electric strain gauges. However, any suitable sensor 42, 42a, 42b, 42c may be used, and the optimal sensor 42, 42a, 42b, 42c will vary from one application to the next.

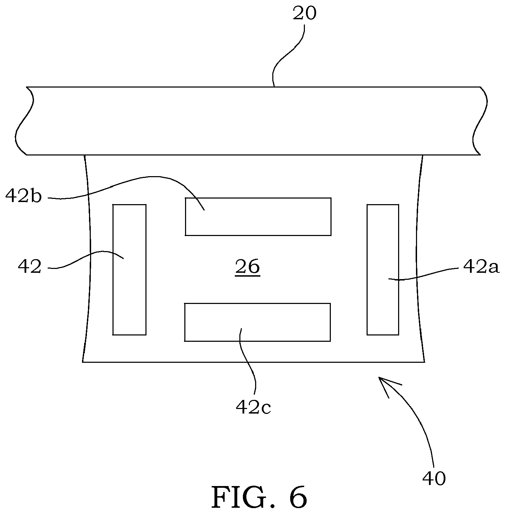

Another sensor web 40 is shown in FIG. 6 as employed with the illustrative embodiment of the groove thrust bearing 10. Here, four sensors 42, 42a, 42c, 42c are shown affixed to a second bearing surface spring 26, wherein the first and second sensors 42, 42a are configured to detect deflection in the vertical direction (from the vantage shown in FIG. 6) and the second and third sensors 42b, 42c are configured to detect deflection in the horizontal direction (from the vantage shown in FIG. 6). Such a sensor web 40 may also be employed on any other spring 24, 34, 36 or other compliancy member of compliant bearings. In this configuration, the readings from the first and second sensors 42, 42a and third and fourth sensors 42b, 42c, respectively, may be averaged or manipulated via an electric device. Other sensor webs 40 may be differently configured and/or configured to detect changes other than those of deflection, such as slope or other variables and/or parameters.

It is contemplated that the various sensors 42 in any given sensor web 40 may be configured to generate a data stream from data points created at specific intervals (e.g., time intervals). This data stream may be recorded and/or displayed in real time to a user who may then adjust the configuration of the compliant bearing to with which the sensor web 40 is employed, and/or adjust the operating parameters of the system with which the compliant bearing is utilized. Accordingly, the sensor web 40 may be beneficial in failure analysis of a compliant bearing and/or predicting failure or other various operating parameters of a compliant bearing. Such a sensor web 40 employed with an axial compliant bearing (such as a groove thrust bearing 10 or pad thrust bearing 12) may detect thrust load upon the bearing during rotation of the shaft 4 in either direction and/or start up thrust load during no rotation. Additionally, a sensor web 40 configured to measure mechanical deformation may be especially useful in determining the thrust force of various types of rotating equipment, including but not limited to turbo machinery.

The optimal dimensions and/or configuration of the main body 14, bearing surface 20, springs 24, 26, 34, 36, bearing pad 30, 30', post 30', post base 34a', and sensor web 40 will vary from one compliant bearing to the next, and are therefore in no way limiting to the scope thereof. The various elements of the compliant bearing may be formed of any material that is suitable for the application for which the compliant bearing is used. Such materials include but are not limited to metals and their metal alloys, polymeric materials, and/or combinations thereof.

Although the specific examples pictured and described herein pertain to a compliant bearing having four or eight or ten bearing pads 30, 30', four first and second bearing surface springs 24, 26, and four pad radial and axial springs 34, 36, the compliant bearing may be configured with other orientations and/or with different quantities of the various elements having different shapes and/or orientations. Accordingly, the scope of the compliant bearing is in no way limited by the specific shape and/or dimensions of the main body 14, bearing surface 20, springs 24, 26, 34, 36, interstitial areas 28, 38, bearing pads 30, 30', posts 34', and/or post bases 34a' or the relative quantities and/or positions thereof.

Having described the preferred embodiments modifications of the disclosed embodiments may be achieved within the scope of the appended claim only.

## Claims

1. A compliant bearing (10), comprising:
a. a main body (14) having a central bore formed therein, wherein said central bore is configured to allow a shaft (4) to pass through said main body via said central bore, and wherein said shaft is rotatable with respect to said main body;
b. a bearing surface (20);
c. a first bearing surface spring (24) integrally formed with said main body, wherein the first bearing surface spring secures said bearing surface to said main body such that said bearing surface is compliant with respect to said main body in a direction parallel to the axis of said bearing surface;
d. a second bearing surface spring (26) integrally formed with said first bearing surface spring, wherein said second bearing surface spring is oriented substantially perpendicular with respect to said first bearing surface spring and engaged with the bearing surface (20); and
e. a plurality of interstitial areas (28) to allow for a predetermined amount of motion of the bearing surface (20) and first and second bearing surface springs (24, 26) with respect to the main body (14), comprising:
- a bottom surface and a top surface of the first bearing surface spring (24),
- a first interstitial area (28) formed between the bottom surface of the first bearing surface spring (24) and the main body (14),
- a first second interstitial area (28) formed between the top surface of the first bearing surface spring (24) and the main body 14,
- a second second interstitial area (28) formed between the top surface of the first bearing surface spring (24) and the main body (14),
- a first third interstitial area (28) formed between the second bearing surface spring (26) and the main body (14), the first third interstitial area (28) forming a first surface of the second bearing surface spring (26) and being interconnected with the first second interstitial area (28) such that a portion of the main body (14) is cantilevered over a portion of the first bearing surface spring (24),
- a second third interstitial area (28) formed between the second bearing surface spring (26) and the main body (14) opposite the first third interstitial area (28), the second third interstitial area (28) forming a second surface of the second bearing surface spring (26) opposite to the first surface and being interconnected with the second second interstitial area (28) such that a portion of the main body (14) is cantilevered over a portion of the first bearing surface spring (24),
- a first fourth interstitial area (28) formed between the bearing surface (20) and main body (14), the first fourth interstitial area (28) being adjacent and substantially parallel to the bearing surface (20) and being interconnected with and substantially perpendicular to the first third interstitial area (28),
- a second fourth interstitial area (28) formed between the bearing surface (20) and main body (14), the second fourth interstitial area (28) being adjacent and substantially parallel to the bearing surface (20) and being interconnected with and substantially perpendicular to the second third interstitial area (28),
wherein a damping material (29) is positioned in at least one of the interstitial areas (28), **characterised in that**
- said first bearing surface spring (24) is oriented perpendicular to the rotational axis of said shaft and to the axis of said bearing surface, and
- said damping material (29) is a rubber material, a silicone material, or a polymer material.

## Patentansprüche

1. Nachgiebiges Lager (10), umfassend:
a. einen Hauptkörper (14) mit einer darin ausgebildeten zentralen Bohrung, wobei die zentrale Bohrung so konfiguriert ist, dass eine Welle (4) über die zentrale Bohrung durch den Hauptkörper hindurchtreten kann, und wobei die Welle in Bezug auf den Hauptkörper drehbar ist;
b. eine Lagerfläche (20);
c. eine erste Lagerflächenfeder (24), die einstückig mit dem Hauptkörper ausgebildet ist, wobei die erste Lagerflächenfeder die Lagerfläche an dem Hauptkörper derart befestigt, dass die Lagerfläche in Bezug auf den Hauptkörper in einer Richtung parallel zur Achse der Lagerfläche nachgiebig ist;
d. eine zweite Lagerflächenfeder (26), die einstückig mit der ersten Lagerflächenfeder ausgebildet ist, wobei die zweite Lagerflächenfeder im Wesentlichen senkrecht zu der ersten Lagerflächenfeder ausgerichtet ist und mit der Lagerfläche (20) in Eingriff steht; und
e. eine Vielzahl von Zwischenbereichen (28), um einen vorbestimmten Bewegungsbetrag der Lagerfläche (20) und der ersten und der zweiten Lagerflächenfeder (24, 26) in Bezug auf den Hauptkörper (14) zu ermöglichen, umfassend:
- eine Bodenfläche und eine obere Fläche der ersten Lagerflächenfeder (24);
- einen ersten Zwischenraum (28), der zwischen der Bodenfläche der ersten Lagerflächenfeder (24) und dem Hauptkörper (14) ausgebildet ist;
- einen ersten zweiten Zwischenraum (28), der zwischen der oberen Fläche der ersten Lagerflächenfeder (24) und dem Hauptkörper 14 ausgebildet ist;
- einen zweiten zweiten Zwischenraum (28), der zwischen der oberen Fläche der ersten Lagerflächenfeder (24) und dem Hauptkörper (14) ausgebildet ist;
- einen ersten dritten Zwischenbereich (28), der zwischen der zweiten Lagerflächenfeder (26) und dem Hauptkörper (14) ausgebildet ist, wobei der erste dritte Zwischenraum (28) eine erste Fläche der zweiten Lagerflächenfeder (26) bildet und verbunden ist mit dem ersten zweiten Zwischenbereich (28), so dass ein Abschnitt des Hauptkörpers (14) über einem Abschnitt der ersten Lagerflächenfeder (24) freitragend ist;
- einen zweiten dritten Zwischenraumbereich (28), der zwischen der zweiten Lagerflächenfeder (26) und dem Hauptkörper (14) gegenüber dem ersten dritten Zwischenraumbereich (28) ausgebildet ist, wobei der zweite dritte Zwischenraumbereich (28) eine zweite Fläche der zweiten Lagerflächenfeder (26) bildet, die der ersten Fläche gegenüberliegt und mit dem zweiten zweiten Zwischenbereich (28) derart verbunden ist, dass ein Abschnitt des Hauptkörpers (14) über einem Abschnitt der ersten Lagerflächenfeder (24) freitragend ist;
- einen ersten vierten Zwischenraum (28), der zwischen der Lagerfläche (20) und dem Hauptkörper (14) gebildet ist, wobei der erste vierte Zwischenraum (28) benachbart und im Wesentlichen parallel zu der Lagerfläche (20) ist und verbunden ist mit und im Wesentlichen senkrecht ist zum ersten dritten Zwischenraum (28);
- einen zweiten vierten Zwischenraum (28), der zwischen der Lagerfläche (20) und dem Hauptkörper (14) ausgebildet ist, wobei der zweite vierte Zwischenraum (28) mit der Lagerfläche benachbart und im Wesentlichen parallel zu dieser ist und verbunden ist mit und im Wesentlichen senkrecht zum zweiten dritten Zwischenraum (28) liegt;
wobei ein Dämpfungsmaterial (29) in mindestens einem der Zwischenbereiche (28) positioniert ist, **dadurch gekennzeichnet, dass**
- die erste Lagerflächenfeder (24) senkrecht zu der Drehachse der Welle und zur Achse der Lagerfläche ausgerichtet ist und
- das Dämpfungsmaterial (29) ein Gummimaterial, ein Silikonmaterial oder ein Polymermaterial ist.

## Revendications

1. Palier flexible (10), comprenant :
a. un corps principal (14) comportant un alésage central formé dans celui-ci, dans lequel ledit alésage central est configuré pour permettre à un arbre (4) de passer à travers ledit corps principal via ledit alésage central, et dans lequel ledit arbre est rotatif par rapport audit corps principal ;
b. une surface de palier (20) ;
c. un premier ressort de surface de palier (24) formé d'un seul tenant avec ledit corps principal, dans lequel le premier ressort de surface de palier fixe ladite surface de palier sur ledit corps principal de sorte que ladite surface de palier soit flexible par rapport audit corps principal dans une direction parallèle à l'axe de ladite surface de palier;
d. un deuxième ressort de surface de palier (26) formé d'un seul tenant avec ledit premier ressort de surface de palier, dans lequel ledit deuxième ressort de surface de palier est orienté sensiblement perpendiculairement par rapport audit premier ressort de surface de palier et engagé avec la surface de palier (20) ; et
e. une pluralité de zones interstitielles (28) pour permettre une quantité de mouvement prédéterminée de la surface de palier (20) et du premier et deuxième ressort de surface de palier (24, 26) par rapport au corps principal (14), comprenant
- une surface inférieure et une surface supérieure du premier ressort de surface de palier (24),
- une première zone interstitielle (28) formée entre la surface inférieure du premier ressort de surface de palier (24) et le corps principal (14),
- une première deuxième zone interstitielle (28) formée entre la surface supérieure du premier ressort de surface de palier (24) et le corps principal (14),
- une deuxième deuxième zone interstitielle (28) formée entre la surface supérieure du premier ressort de surface de palier (24) et le corps principal (14),
- une première troisième zone interstitielle (28) formée entre le deuxième ressort de surface de palier (26) et le corps principal (14), la première troisième zone interstitielle (28) formant une première surface du deuxième ressort de surface de palier (26) et étant interconnectée avec la première deuxième zone interstitielle (28) de sorte qu'une partie du corps principal (14) est en porte à faux sur une partie du premier ressort de surface de palier (24),
- une deuxième troisième zone interstitielle (28) formée entre le deuxième ressort de surface de palier (26) et le corps principal (14) opposée à la première troisième zone interstitielle (28), la deuxième troisième zone interstitielle (28) formant une deuxième surface du deuxième ressort de surface de palier (26) opposée à la première surface et étant interconnectée avec la deuxième deuxième zone interstitielle (28) de sorte qu'une partie du corps principal (14) est en porte à faux sur une partie du premier ressort de surface de palier (24),
- une première quatrième zone interstitielle (28) formée entre la surface de palier (20) et le corps principal (14), la première quatrième zone interstitielle (28) étant adjacente et sensiblement parallèle à la surface de palier (20) et étant interconnectée avec et substantiellement perpendiculaire à la première troisième zone interstitielle (28),
- une deuxième quatrième zone interstitielle (28) formée entre la surface de palier (20) et le corps principal (14), la deuxième quatrième zone interstitielle (28) étant adjacente et essentiellement parallèle à la surface de palier (20) et étant interconnecté avec et substantiellement perpendiculaire à la deuxième troisième zone interstitielle (28),
dans lequel un matériau amortisseur (29) est positionné dans au moins l'une des zones interstitielles (28), **caractérisé en ce que**
- ledit premier ressort de surface de palier (24) est orienté perpendiculairement à l'axe de rotation dudit arbre et à l'axe de ladite surface de palier, et
- ledit matériau amortisseur (29) est un matériau de caoutchouc, un matériau de silicone ou un matériau polymère.
